Europäisches Patentamt

European Patent Office

Office européen des brevets

(11) Veröffentlichungsnummer: **0 344 473**

**A1**

(12) **EUROPÄISCHE PATENTANMELDUNG**

(21) Anmeldenummer: 89107829.7

(22) Anmeldetag: 29.04.89

(51) Int. Cl.⁴: **D01H 1/244 , B65H 54/74 , H02K 5/08**

(30) Priorität: 28.05.88 DE 3818196

(43) Veröffentlichungstag der Anmeldung:
06.12.89 Patentblatt 89/49

(84) Benannte Vertragsstaaten:
AT CH DE FR IT LI

(71) Anmelder: **ASEA BROWN BOVERI AG**
**Haselstrasse**
**CH-5401 Baden(CH)**

. Anmelder: **Zinser Textilmaschinen GmbH**
**Hans-Zinser-Strasse Postfach 1480**
**D-7333 Ebersbach/Fils(DE)**

(72) Erfinder: **Fetzer, Gustav, Ing.**
**Hindenburgstrasse 161**
**D-7344 Gingen(DE)**
Erfinder: **Gubler, Rudolf**
**Riedwiesstrasse 18**
**CH-5412 Gebenstorf(DE)**

(74) Vertreter: **Wilhelm & Dauster Patentanwälte**
**European Patent Attorneys**
**Hospitalstrasse 8**
**D-7000 Stuttgart 1(DE)**

(54) **Spindel mit elektromotorischem Antrieb für eine Spinnereimaschine.**

㊻ Bei einer Spindel mit elektromotorischem Antrieb für eine Spinnereimaschine wird vorgesehen, daß der mit dem Lagergehäuse der Spindel drehfest verbundene Stator als eine Baueinheit ausgete angeordnet ist. Die Baueinheit umfaßt das Blechpaket, die Wicklung und eine an der Platte befestigbare Halterung. Die Räume zwischen den in axialer Richtung aus dem Blechpaket herausragenden Teilen der Wicklung sind mit einer aushärtenden Masse ausgefüllt, die unmittelbar an die äußeren Bleche des Blechpakets anschließt.

Fig.1

EP 0 344 473 A1

## Spindel mit elektromotorischem Antrieb für eine Spinnereimaschine

Die Erfindung betrifft eine Spindel mit elektromotorischem Antrieb für eine Spinnereimaschine, die an einer Spindelbank anbringbar ist und die einen in einem Lagergehäuse gelagerten Schaft aufweist, der drehfest mit einem Rotor verbunden ist, dessen zugehöriger Stator drehfest mit dem an der Spindelbank anbringbaren Lagergehäuse verbunden ist und ein Blechpaket und eine Wicklung enthält.

Bei einer derartigen Spindel ist der Schaft aus dem Lagergehäuse herausziehbar. Um zu verhindern, daß bei dem Wiedereinsetzen des Schaftes in sein Lagergehäuse bei einer unachtsamen Hantierung die Wicklung beschädigt wird, sollte diese geschützt sein. Außerdem sollte die Wicklung auch in den von außen zugänglichen Bereichen gegen Berührung und/oder Beschädigung geschützt sein.

Der Erfindung liegt die Aufgabe zugrunde, eine Spindel der eingangs genannten Art so auszubilden, daß die Wicklung des Stators gegen Berühren und/oder Beschädigen geschützt ist.

Diese Aufgabe wird dadurch gelöst, daß der Stator als eine Baueinheit ausgebildet ist, die auf einer an dem Lagergehäuse befestigten Platte angeordnet ist und die das Blechpaket, die Wicklung und eine an der Platte befestigbare Halterung umfaßt, und daß die Räume zwischen den in axialer Richtung aus dem Blechpaket herausragenden Teilen der Wicklung mittels einer aushärtenden Masse ausgefüllt sind, die jeweils unmittelbar an die äußeren Bleche des Blechpaketes anschließt.

Durch die aushärtende Masse wird ein Schutz der Wicklung erhalten, der darüber hinaus noch den großen Vorteil bietet, daß entstehende Wärme besser abgeführt werden kann. Dabei ist praktisch jedes feste Material besser für eine Wärmeabfuhr geeignet, als die üblichen Wicklungen von Elektromotoren umgebende Luft.

Bei einer ersten Ausführungsform der Erfindung wird vorgesehen, daß das Blechpaket mit gleichförmig verteilt angeordneten, das Blechpaket beidseits überragenden und haltenden Säulen einen Rahmen bildet, der mit dem Bereich der Wicklung abdeckenden Ansätzen versehen ist, die mit der aushärtenden Masse ausgegossen sind. Bei dieser Ausführungsform kann die Funktion des Schutzes der Wicklung wenigstens teilweise den Einsätzen übertragen werden, während die aushärtende Masse dann im wesentlichen der verbesserten Wärmeableitung dient.

Bei einer weiteren Ausführungsform der Erfindung ist vorgesehen, daß das Blechpaket und die Wicklung in einen Körper eingegossen sind, der als die an der Platte zu befestigende Halterung geformt ist. Bei dieser Ausführungsform hat der gegossene Körper nicht nur eine Schutzfunktion und eine Funktion zur Verbesserung der Wärmeableitung, sondern dient gleichzeitig auch noch als Halter.

In weiterer Ausgestaltung der Erfindung wird vorgesehen, daß als aushärtende Masse ein gießfähiger Kunststoff vorgesehen ist. Um die Wärmeableitung zu verbessern, wird in weiterer Ausgestaltung der Erfindung vorgesehen, daß in den Kunststoff Partikel mit erhöhter Wärmeleitfähigkeit eingelagert sind. Um die Festigkeit zu erhöhen, wird in weiterer Ausgestaltung vorgesehen, daß der Kunststoff faserverstärkt ist. Bei einer geeigneten Materialwahl können die zur Verstärkung dienenden Fasern auch gleichzeitig das Material sein, was die Wärmeableitung verbessert.

Weitere Merkmale und Vorteile der Erfindung ergeben sich aus der nachfolgenden Beschreibung der in der Zeichnung dargestellten Ausführungsformen.

Fig. 1 zeigt einen Axialschnitt durch eine erfindungsgemäße Spindel, wobei die Schnitte links der Mittelachse und rechts der Mittelachse in zueinander versetzten Ebenen liegen, und

Fig. 2 einen Axialschnitt entsprechend Fig. 1 durch eine weitere Ausführungsform der Erfindung.

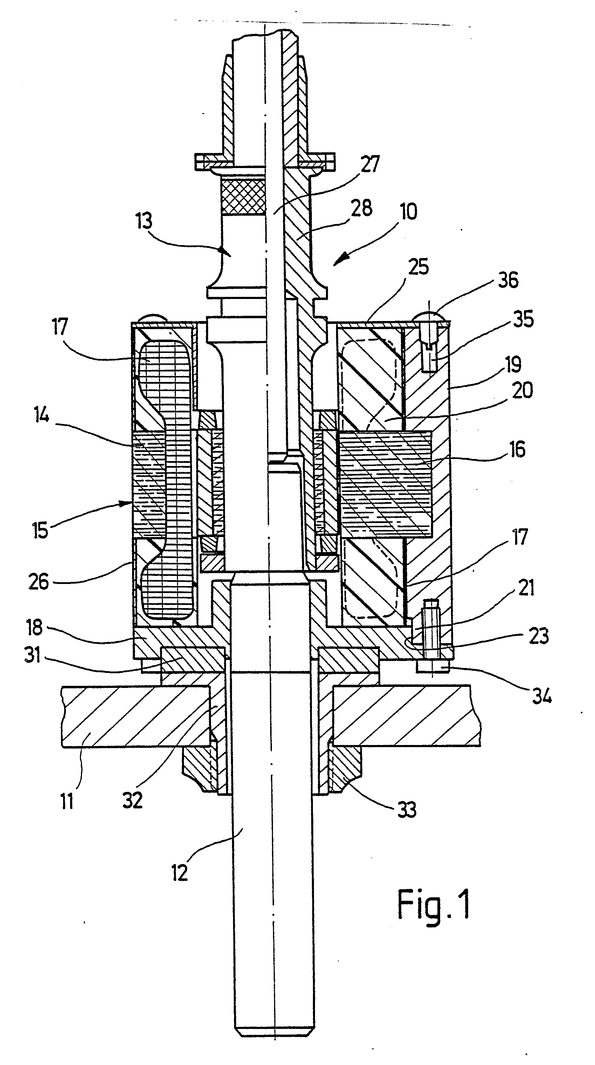

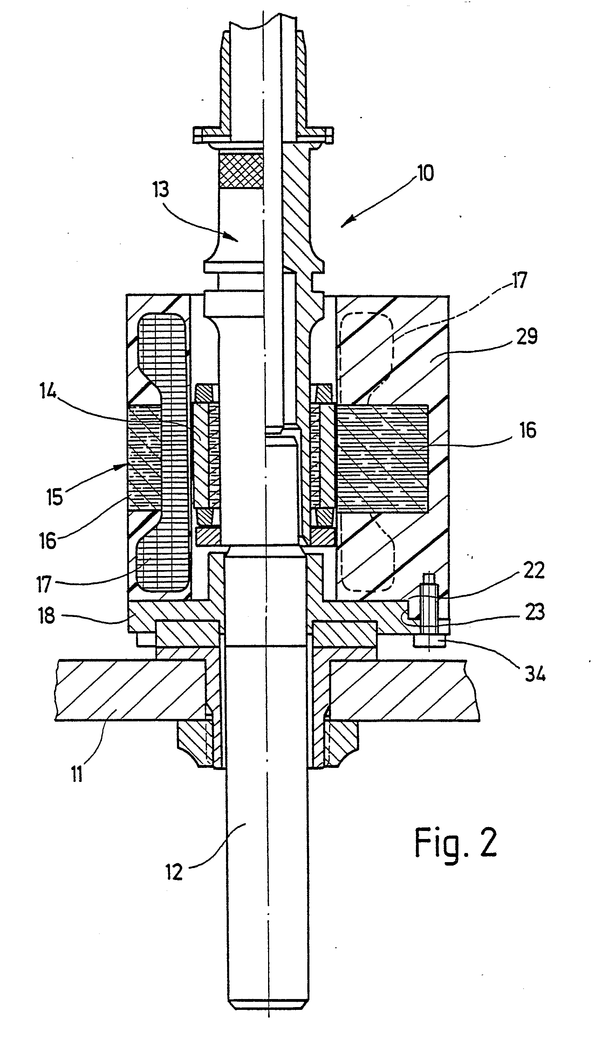

Um die Schnitte nach Fig. 1 und 2 etwas verständlicher werden zu lassen, ist hierzu zu sagen, daß das Blechpaket (16) des Stators (15) aus Blechen besteht, die eine im wesentlichen quadratische Grundfläche aufweisen. Die linke Hälfte von Fig. 1 und 2 zeigt einen Schnitt, der lotrecht zu einer Seitenkante geführt ist, und bei welcher der Spindelschaft (13) nicht geschnitten ist. Die rechte Hälfte von Fig. 1 und 2 zeigt jeweils einen Schnitt, der diagonal zu den im wesentlichen quadratischen Flächen des Blechpaketes geführt ist, und bei welchem der Spindelschaft (13) teilweise geschnitten ist. Dies bedeutet, daß die linke Schnittebene um 135° versetzt zu der rechten Schnittebene liegt.

Die in Fig. 1 und 2 dargestellten Spindeln (10) sind insbesondere für Ringspinnmaschinen bestimmt und dienen zur Aufnahme von Spinnspulen oder Kopsen. Soweit bei den Ausführungsformen nach Fig. 1 und 2 die gleichen Bauteile verwendet werden, werden die gleichen Bezugzeichen eingesetzt. Außerdem werden diese Teile nur in Verbindung mit Fig. 1 beschrieben. Die Spindel (10) weist ein Lagergehäuse (12) auf, in welchem in nicht näher dargestellter Weise in einem Fußlager und in einem Halslager der Spindelschaft (13) gelagert ist. Der Spindelschaft (13) besteht aus einem in das Lagergehäuse (12) eingesteckten und dort gelagerten Teil (27), an welchem ein Teil (28) befestigt ist,

der den oberen Bereich des Lagergehäuses (12), d.h. den Bereich des Halslagers, glockenartig umgreift und der einen Rotor (14) trägt. Dieser Teil ist in dem oberen, nicht dargestellten Bereich so ausgebildet, daß eine Spulenhülse aufgesteckt werden kann.

Der Rotor (14) ist in üblicher Weise aufgebaut, d.h. er besitzt ein Blechpaket und einen Käfig aus in Nuten liegenden Stäben und Kurzschlußringen. Dem Rotor (14) liegt unter Belassen eines Luftspaltes ein Stator (15) mit seinem Blechpaket (16) gegenüber. Das Blechpaket (16) ist in bekannter Weise mit axial gerichteten Nuten versehen, die eine Wicklung (17) aufnehmen. Die Wicklung (17) ragt in axialer Richtung beidseits über das Blechpaket (16) über. Der Stator (15) ist an dem Lagergehäuse (12) drehfest befestigt, das seinerseits über ein elastisches Zwischenglied (31) auf einer Hülse (32) angeordnet ist, die durch eine Spindelbank (11) hindurchgesteckt ist und auf die eine Mutter (33) aufgeschraubt ist.

Bei dem Ausführungsbeispiel nach Fig. 1 sind die Eckbereiche der Bleche des Blechpaketes (16) profiliert, so daß sie eine Art Verankerungsprofil bilden, an das Säulen (19) angegossen sind, die das Blechpaket (16) in axialer Richtung mit einer Länge überragen, die etwas größer ist als die Länge, mit der die Wicklung (17) in axialer Richtung aus dem Blechpaket (16) herausragt. Die Säulen (19) sind an das zusammengepreßte Blechpaket (16) angegossen, wobei insbesondere ein Aluminiumdruckguß für die Säulen (19) verwendet wird. Die unteren, inneren Enden der Säulen (19) sind mit einer stufenförmigen Profilierung (21) versehen, die auf einem gemeinsamen Kreis liegt. Dieser stufenförmigen Profilierung (21) ist eine Gegenprofilierung (23) der Platte (18) zugeordnet, die mit einem Kragen an dem Lagergehäuse (12) fest angeordnet ist. Die Säulen (19) werden somit über die Profilierung (21) und die Gegenprofilierung (23) gegenüber dem Lagergehäuse (12) zentriert. Die Befestigung erfolgt über Schrauben (34), die die Platte (18) durchdringen und die in ein Stirnende der Säulen (19) eingeschraubt sind.

Das andere Stirnende der Säulen (19) ist ebenfalls mit einer Aussparung (35) versehen, in welche Nieten (36) eindringen. Die Nieten (36) dienen zum Befestigen eines kappenartigen Einsatzes (25), der die in dieser Richtung über das Blechpaket (16) hinausragenden Teil der Wicklung (17) umgreift. Die Kappe (25) besitzt einen inneren hülsenartigen Abschnitt, der einen Innendurchmesser aufweist, der etwas geringer als der Innendurchmesser des Blechpaketes (16) ist. Die unteren Teile der Wicklung 17) werden von einem hülsenförmigen Einsatz (26) umschlossen, der zwischen dem Blechpaket (16) und der Platte (18) angeordnet ist. Der Einsatz (25) und der Einsatz (26) schützen die Wicklung (17) vor Berührung und/oder Beschädigung, wobei insbesondere auch der innere, oberhalb des Blechpaketes (16) befindliche Bereich geschützt ist. Die von den Einsätzen (25 und 26) umschlossenen Bereiche sind durch eine gießfähige Kunststoffmasse (20) ausgegossen, die außerhalb des Blechpaketes (16) die Räume zwischen der Wicklung (17) ausfüllt und die unmittelbar an die jeweils äußeren Bleche des Blechpaketes (16) anschließt.

Das Blechpaket (16) ist in den Bereichen zwischen den Säulen (19) an der Außenfläche nicht abgedeckt. Die Säulen (19) sind so ausgebildet, daß sie die etwas ausgeschnittenen und profilierten Enden der im wesentlichen eine quadratische Grundfläche aufweisenden Bleche des Blechpaketes ergänzen, so daß ein insgesamt quaderförmiger Körper entsteht. Der zum Ausgießen benutzte Kunststoff ist zweckmäßigerweise mit eingelagerten Partikeln versehen, die eine gegenüber dem Kunststoff noch erhöhte Wärmeleitfähigkeit besitzen. Schon durch den Kunststoff alleine wird eine bessere Wärmeabfuhr erhalten, als wenn die von den Einsätzen (25, 26) umschlossenen Hohlräume nur von den in diesen Bereich hineinragenden Teilen der Wicklung (17) und Luft ausgefüllt wären.

Bei der Ausführungsform nach Fig. 2 ist das Blechpaket (16) des Stators (15), das ebenfalls aus Blechen mit im wesentlichen quadratischer Grundfläche besteht, zunächst mit der in Nuten liegenden Wicklung (17) versehen. Danach ist an das Blechpaket (16) und die Wicklung (17) ein Körper (29) angegossen, der die aus dem Blechpaket (16) herausragenden Teile der Wicklung (17) umhüllt und der unmittelbar an die äußeren Bleche des Blechpaketes (16) anschließt. Der Innendurchmesser des Körpers ist gleich groß oder größer als der Innendurchmesser des Blechpaketes. Dieser Körper (29) ist aus einem Kunststoff hergestellt, der durch Fasereinlagen verstärkt ist, insbesondere durch Kohlefasereinlagen. Außerdem enthält der Kunststoff zweckmäßigerweise Partikel, die eine höhere Wärmeleitfähigkeit als der Kunststoff aufweisen.

Der Körper (29) bildet mit dem Blechpaket (16) und der Wicklung (17) eine Baueinheit, die eine quaderförmige Gestalt aufweist und die als solche an der Platte (18) befestigt ist. Der Körper (29) ist im Bereich seines unteren Endes mit einer stufenartigen, ringförmig umlaufenden Profilierung (22) versehen, die der Gegenprofilierung (23) der Platte (18) zugeordnet ist und durch die der Körper (29) an der Platte (18) zentriert wird. Der Körper (29) wird an der Platte (18) mittels Schrauben (34) gehalten, die in das Stirnende des Körpers (29) eingeschraubt sind.

Der Körper (29) faßt die etwas abgeschnittenen und ein Verankerungsprofil bildenden Ecken der Bleche des Blechpaketes (16) ein und ergänzt im übrigen die Grundfläche der Bleche zu einem vollständigen Quadrat. Die Baueinheit besitzt somit eine quaderförmige Gestalt. Die Außenflächen des Blechpaketes (16) liegen in dem Bereich zwischen den Ecken frei. Der Körper (29) bietet somit einen Schutz der Wicklung gegen Beschädigung und bewirkt außerdem eine verbesserte Wärmeabfuhr.

**Ansprüche**

1. Spindel mit elektromotorischem Antrieb für eine Spinnereimaschine, die an einer Spindelbank anbringbar ist und die einen in einem Lagergehäuse gelagerten Schaft aufweist, der drehfest mit einem Rotor verbunden ist, dessen zugehöriger Stator drehfest mit dem an der Spindelbank anbringbaren Lagergehäuse verbunden ist und ein Blechpaket und eine Wicklung enthält, dadurch gekennzeichnet, daß der Stator als eine Baueinheit ausgebildet ist, die auf einer an dem Lagergehäuse (12) befestigten Platte (18) angeordnet ist und die das Blechpaket (16), die Wicklung (17) und eine an der Platte (18) befestigbare Halterung (19, 29) umfaßt, und daß die Räume zwischen den in axialer Richtung aus dem Blechpaket (16) herausragenden Teilen der Wicklung (17) mittels einer aushärtenden Masse (20) ausgefüllt sind, die jeweils unmittelbar an die äußeren Bleche des Blechpakets (16) anschließt.

2. Spindel nach Anspruch 1, dadurch gekennzeichnet, daß die Halterung (19, 29) mit einer Profilierung (21, 22) versehen ist, über die sie an einer Gegenprofilierung (23) der Platte (18) zentriert ist.

3. Spindel nach Anspruch 1 oder 2, dadurch gekennzeichnet, daß das Blechpaket (16) mit gleichmäßig verteilt angeordneten, das Blechpaket (16) beidseits überragenden und haltenden Säulen (19) einen Rahmen bildet, der mit den Bereich der Wicklungen (17) abdeckenden Einsätzen (25, 26) versehen ist, die mit der aushärtenden Masse (20) ausgegossen sind.

4. Spindel nach Anspruch 3, dadurch gekennzeichnet, daß das Blechpaket (16) aus Blechen mit im wesentlichen quadratischer Grundfläche gebildet ist, und daß die Säulen (19) in den Ecken angebracht sind.

5. Spindel nach Anspruch 3 oder 4, dadurch gekennzeichnet, daß der Außenumfang des Blechpakets (16) zwischen den Säulen (19) frei liegt.

6. Spindel nach Anspruch 1 oder 2, dadurch gekennzeichnet, daß das Blechpaket (16) und die Wicklung (17) in einen Körper 29) eingegossen sind, der als die an der Platte (18) zu befestigende Halterung geformt ist.

7. Spindel nach Anspruch 6, dadurch gekennzeichnet, daß das Blechpaket (16) aus Blechen mit im wesentlichen quadratischer Grundfläche gebildet ist, und daß der angegossene, als Halterung dienende Körper (29) das Blechpaket (16) nur im Bereich der Ecken umgreift und im übrigen die Außenflächen des Blechpaketes (16) frei läßt.

8. Spindel nach einem der Ansprüche 1 bis 7, dadurch gekennzeichnet, daß als aushärtende Masse (20) ein gießfähiger Kunststoff vorgesehen ist.

9. Spindel nach Anspruch 8, dadurch gekennzeichnet, daß in den Kunststoff Partikel mit erhöhter Wärmeleitfähigkeit eingelagert sind.

10. Spindel nach Anspruch 8 oder 9, dadurch gekennzeichnet, daß der Kunststoff faserverstärkt ist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | DE-C-3336577 (SKF KUGELLAGERFABRIKEN GMBH) <br> * Spalte 2, Zeile 2 - Zeile 12 * <br> --- | 1, 8 | D01H1/244 <br> B65H54/74 <br> H02K5/08 |
| Y | US-A-4352897 (M.OGATA ET.AL.) <br> * Spalte 6, Zeile 12 - Zeile 24 * <br> * Spalte 6, Zeile 4 - Zeile 10 * <br> --- | 1, 8 <br><br> 7 | |
| A | US-A-3858067 (C.W.OTTO) <br> * Spalte 3, Zeile 48 - Spalte 4, Zeile 15; Figuren 1-3 * <br> --- | 3-5 | |
| A | DE-A-2839179 (HITACHI LTD.) <br> * Seite 31, Zeile 1 - Zeile 15; Figur 1 * <br> * Seite 11, Zeile 19 - Zeile 21 * <br> --- | 1 <br><br> 10 | |
| A | FR-A-2077160 (GENERAL ELECTRIC COMP.) <br> ----- | | |

RECHERCHIERTE
SACHGEBIETE (Int. Cl.4 )

D01H
B65H

Der vorliegende Recherchenbericht wurde für alle Patentansprüche erstellt

| Recherchenort | Abschlußdatum der Recherche | Prüfer |
|---|---|---|
| DEN HAAG | 18 AUGUST 1989 | HOEFER W.D. |